# EUROPEAN PATENT SPECIFICATION

(11) **EP 2 121 818 B1**
(45) Date of publication and mention of the grant of the patent: **29.08.2012**
(21) Application number: 07867833.1
(22) Date of filing: 17.12.2007
(51) Int. Cl.: B29B 17/02, C08J 11/06, C08J 11/08

(54) **METHOD OF RECYCLING PLASTIC**
VERFAHREN ZUR WIEDERGEWINNUNG VON KUNSTSTOFF
PROCÉDÉ DE RECYCLAGE DE PLASTIQUE

(30) Priority: 09.02.2007 US 900669 P
(43) Date of publication of application: 25.11.2009
(73) Proprietor: Dow Corning Corporation, Midland, Michigan 48686-0994 (US)
(72) Inventor: RAPSON, Lawrence, Joseph, Bay City, MI 48708 (US)
(74) Representative: Donlan, Andrew Michael
(86) International application number: PCT/US2007/025924
(87) International publication number: WO 2008/097306

(56) References cited:
- EP-A- 0 469 904
- WO-A-91/04100
- US-A- 4 111 798
- US-A- 4 830 188
- US-A- 5 981 610

## Description

### BACKGROUND OF THE INVENTION

The present invention relates to a method of separating a cured silicone composition and a plastic. The first step of the method comprises combining a composition comprising a cured silicone composition and a plastic with a liquid that has a specific gravity between that of the cured silicone composition and that of the plastic. The second step of the method comprises allowing the cured silicone composition and the plastic to stratify in the liquid, and the third step comprises physically separating the cured silicone composition and the plastic by removing either the plastic or the cured silicone composition stratum from the liquid.

The benefits of recycling plastic are well known and include saving energy, resources, the environment, and cost reduction. The post-consumer plastic recycling process works by first collecting used plastic articles. Nowadays, most cities have plastic collection processes in place. Typically, once the plastic articles are collected, they are separated from other recyclable materials collected and sorted according to the composition of the plastic. After this initial sorting, the plastic is punctured, baled and sent to a reclaimer who subjects the plastic to further processing including separating the plastic from any remaining non-plastic materials that may diminish the quality of the recycled plastic.

One means of separating the plastic from other materials in the reclamation process is through a series of washing steps. In the wash steps, the materials are placed in water, and the materials that are of lower specific gravity than water float and the desired plastic, which is of higher specific gravity, sinks allowing for separation of the other materials from the higher density plastic. The plastic is then further processed and made into flakes which are sold to manufacturers, who melt the flakes to form new products. One issue with this method is similar specific gravity materials cannot be adequately separated or removed from each other.

Cured silicones have gained application with plastics in areas such as valve diaphragms in plastic bottles. The cured silicones are advantageous because their elasticity can be tightly controlled, their thermal stability is excellent, and they have excellent low temperature flexibility to provide consistent performance from package to package and over a variety of conditions. However, this use of cured silicone with plastics has created challenges in the plastic recycling process, because the cured silicones are difficult to separate from the plastic. When the cured silicone remains in the plastic through the recycling process, the resulting recycled plastic can be of lower quality because of issues such as areas of discoloration. To conceal these imperfections, manufacturers must take further steps such as heavy coloration, which can limit the applications for the recycled plastic. To avoid these non-value added further steps, recyclers manually remove the cured silicone from the plastic recycle stream, but this greatly drives up the associated costs. Therefore, the inventor has developed a novel means to separate cured silicone from plastic, which reduces or eliminates the need for manual separation.
US 4,830,188 discloses a method of separating mixed plastic flakes of high and low specific gravities into heavy and light fractions wherein the mixed flakes are placed into a floatation liquid so that each flake sinks or floats according to its density.
US 5,981,610 discloses thixotropic silicone rubber composition comprising an alkenyl radical-containing organopolysiloxane, an organohydrogenpolysiloxane, an addition reaction catalyst, filler balloons and a thixotropic agent.

### BRIEF SUMMARY OF THE INVENTION

The present invention relates to a method of separating a cured silicone and a plastic.
The first step of the method comprises combining a cured silicone composition and a plastic with a liquid that has a specific gravity between that of the cured silicone composition and that of the plastic. The second step of the method comprises allowing the cured silicone composition and the plastic to stratify in the liquid, and the third step comprises physically separating the cured silicone composition and the plastic by removing either the plastic or non-plastic stratum from the liquid.

As used herein, "cure" is intended to mean the modification of the physical properties of a silicone polymer or silicone resin by chemical reaction such as condensation, polymerization, or addition, and is usually accomplished by the action of either heat, pressure, cross-linker, free radical generation, UV or energy beam, or catalyst, or some combination thereof.

As used herein, "hollow" is intended to mean a material containing areas that are free of any solid material and contemplates core-shell structures, such as bubbles where the shells are solid material and the cores are air and/or a specific gas, and semi-solid discontinuous structures containing a plurality of voids (or bubbles) such as solid foams or "Swiss cheese" type structure.

As used herein, "silicone" is intended to mean a siloxane polymer comprising alternate silicon and oxygen atoms with various organic radicals attached to the silicon and includes, but is not limited to, silicone resins and polymers containing such bonds.

As used herein, "void" is intended to mean an empty space within a material such as the pockets of air or gas in a foam.

### DETAILED DESCRIPTION OF THE INVENTION

The present invention relates to a method of separating a cured silicone composition and a plastic. The first step of the method comprises combining a cured silicone composition and a plastic with a liquid that has a specific gravity between that of the cured silicone composition and that of the plastic. The second step of the method comprises allowing the cured silicone composition and the plastic to stratify in the liquid, and the third step comprises physically separating the cured silicone composition and the plastic by removing one of the strata from the liquid.

The first step of the invention comprises combining a cured silicone composition and a plastic with a liquid that has a specific gravity between that of the cured silicone composition and that of the plastic. The combining step may be accomplished by any suitable means known in the art for combining or introducing a solid material to a liquid. Examples of means for introducing the cured silicone composition and the plastic into the liquid of the invention include, but are not limited to, air, belt, ribbon, or screw conveyance, or manual addition.

Prior to combining the cured silicone composition and the plastic with the liquid, the plastic and cured silicone composition may be pretreated. Examples of such pretreatment included, but are not limited to, shredding, chopping, grinding, and/or washing. By this means, the plastic and the cured silicone composition are typically broken into distinct pieces. Any means known in the art may be used to conduct said shredding, chopping, grinding, and/or washing. One with skill in the art would know how to select appropriate equipment to conduct the desired treatment.

The cured silicone composition of the invention comprises an organopolysiloxane composition and has a specific gravity which is opposite to the specific gravity of the plastic in relation to the specific gravity of the liquid. That is, when the specific gravity of the plastic is above the specific gravity of the liquid, the specific gravity of the cured silicone composition is such that the cured silicone composition will float in the liquid, and when the specific gravity of the plastic is below that of the liquid, the specific gravity of the cured silicone composition is above that of the liquid. Therefore, the actual specific gravity of the cured silicone composition of the invention may vary. In one embodiment, the cured silicone composition of the invention has a specific gravity of less than 1; in another embodiment, the specific gravity of the cured silicone composition is less than 0.99; in another embodiment, the specific gravity of the cured silicone composition is from about 0.5 to less than 1; in another embodiment, the specific gravity of the cured silicone composition is from about 0.8 to about 0.99; in another embodiment, the specific gravity of the cured silicone composition is from about 0.9 to about 0.99; in another embodiment, the specific gravity of the cured silicone composition is from about 0.95 to about 0.99; in another embodiment, the specific gravity of the cured silicone composition is from about 0.94 to about 0.98: in another embodiment, the specific gravity of the cured silicone composition is from about 1.0 to about 1.5: in another embodiment, the specific gravity of the cured silicone composition is from about 1.01 to about 1.35: in another embodiment, the specific gravity of the cured silicone composition is from about 1.1 to about 1.30: in another embodiment, the specific gravity of the cured silicone composition is greater than 1. Specific gravity of the cured silicone composition is determined in relation to water by measuring the weight in grams and the volume in cubic centimeters of the cured silicone composition at standard temperature and pressure.

In one embodiment, the actual or measured specific gravity of the cured silicone composition is above the specific gravity of the liquid; however, the cured silicone composition will float and/or stratify because air is entrapped or nucleated on the surface of the cured silicone. The entrapped or nucleated air gives the cured silicone an effective specific gravity below that of the solvent thereby causing the cured silicone to float and/or stratify in the liquid when, based on the actual measured specific gravity, one would expect the cured silicone to sink. In one embodiment, the actual measured specific gravity of the cured silicone is above 1, but the effective specific gravity in the liquid, water in this case, is below 1, and the cured silicone floats.

The cured silicone composition may be produced by any method suitable for the organopolysiloxane composition of which it comprises. The only restriction of the production method to produce the cured silicone composition is the resulting cured silicone composition exhibit the desired specific gravity for the separation process of the invention and the properties for the intended application. The cured silicone composition may be produced by elevated or room temperature curing, injection molding, press vulcanization, extrusion, or calendering with or without pressure. In one embodiment, the cured silicone composition may be formed by curing a thermosetting organopolysiloxane composition with a platinum catalyst by injection molding. The cured silicone composition may be produced in any shape or form required of the intended application.

The cured silicone composition of the invention comprises an organopolysiloxane composition. There is really no limit to the organopolysiloxane composition of the present invention except that it produces a cured silicone composition with the desired specific gravity to stratify in the recycling process of the invention and with the desired application properties for the intended application. Although primarily liquid organopolysiloxanes are hereafter described to produce the cured silicone compositions of the invention, the use of silicone gums are also contemplated. In one embodiment, the organopolysiloxane composition comprises a thermosetting organopolysiloxane and a catalyst or cross-linking agent and cures at elevated temperatures to form the cured silicone composition of the invention. In a related embodiment, the thermosetting organopolysiloxane composition to form the cured silicone composition of the invention comprises (A) an alkenylpolysiloxane which contains at least two silicon-bonded alkenyl groups in each molecule, (B) an organohydrogenpolysiloxane which has at least two silicon-bonded hydrogen atoms in each molecule, where the mole ratio of silicon-bonded hydrogen atoms contained in this component (B) to silicon-bonded alkenyl groups contained in component (A) is within a range of 0.3:1 to 5:1, (C) a platinum catalyst providing metallic platinum atoms, and (D) a void-creating material. Examples of commercial thermosetting organopolysiloxane compositions which may be used to form the cured silicone composition according to the present invention include those sold by Dow Coming under the SILASTIC^{®} trademark such as the following: SILASTIC 94-595, 99-595, 9280/30, 9280/60E, 9280/70E, 9280/75E, LC-20-2004, LC-30-2004, LC-40-2004, LC-45-2004, LC-50-2004, LC-60-2004, LC-65-2004, LC-70-2004, and LC-75-2004.

The cure time of the theremosetting organopolysiloxanes of the present invention depends on the thickness of the organopolysiloxane and the cure temperature. Typically, the time for a thermosetting organopolysiloxane to cure is accelerated with increasing temperature. One with skill in the art would know how to select the temperature and pressure to optimize the cure rate for a specific thermosetting orgaonopolysiloxane and the application such as injection molding. To enable adequate cure rate for injection molding processes, the cure temperature for thermosetting organopolysiloxanes of the invention can vary. In one embodiment of the invention, the a cure temperature is from about 50 to about 300 degrees Celsius; in another embodiment, from about 100 to about 250 degrees Celsius; in -another, embodiment, from about 150 to about 250 degrees Celsius; in another embodiment, from about 175 to about 225 degrees Celsius.

In another embodiment, the organopolysiloxane composition comprises a organopolysiloxane composition that will cure at room temperature to form the cured silicone composition. In one embodiment, the room temperature curing organopolysiloxane composition comprises a silanol compound and/or an organopolysiloxane containing one or more silanol groups, an organohydrogenpolysiloxane which has one or more silicon-bonded hydrogen atom in each molecule, and a catalyst. In another embodiment, the room temperature curing organopolysiloxane composition comprises an organopolysiloxane having one or more silanol groups, an alkoxysiloxane, and a catalyst. In another embodiment, the room temperature curing organopolysiloxane compositon comprises an acetoxy organosilane, and an organopolysiloxane containing one or more silanol groups and cures upon exposure to moisture. In another embodiment, the room temperature curing organopolysiloxane compositon comprises a methoxy organosilane, a silanol compound and/or an organopolysiloxane containing one or more silanol groups and cures upon exposure to moisture.

The organopolysiloxane composition of the invention may contain a metal catalyst and/or cross-linking agent including, but not limited to, an organic or inorganic peroxide, platinum, rhodium, tin (such as dibutyltindilaurate, dibutyltindiacetate or stannous octoate), or a multi-element catalyst (such as stannous chloride our a polysulfido-platinum compound).

The organopolysiloxane composition may further comprise materials to lower the specific gravity of the resulting cured silicone composition of the invention. These materials to lower the specific gravity may be described as "void-creating" materials because they create voids in the cured silicone composition of the invention and include, but are not limited to injected gases, reaction generated gases, sections of solid or stiff foam, hollow glass or ceramic spheres, thermally expanding polymers or plastic beads, and organic materials which thermally decompose to form gas. In one embodiment, the organopolysiloxane composition produces gas as a by-product of its curing process. The gas is trapped inside the resulting cured silicone composition creating voids or gas bubbles in the cured silicone composition thereby reducing the specific gravity of the resulting cured silicone composition. The more gas that is produced and trapped, the lower the resulting cured silicone composition specific gravity. One of ordinary skill in the art would be able to select appropriate organopolysiloxane compositions which create the appropriate amount of gas as the organopolysiloxane compositions cure to provide a cured silicone composition of desired specific gravity. In another embodiment, the organopolysiloxane composition further comprises an organic material that thermally decomposes during cure process creating gas which is then trapped in the cured silicone composition creating voids or bubbles in the cured silicone composition. In another embodiment, the organopolysiloxane composition of the invention further comprises a thermal expanding polymer which expands to lower the specific gravity of the resulting cured silicone composition during the curing step of a thermosetting organopolysiloxane composition. In another embodiment, the organopolysiloxane composition of the invention further comprises hollow particles to reduce the specific gravity of the resulting cured silicone composition produced.

The materials incorporated in the organopolysiloxane to lower the specific gravity of cured silicone, or "void-creating" materials, should be sufficiently dispersed in the organopolysiloxane composition so that the cured silicone will stratify and/or float after being pretreated for the intended recycling process. For example, if the cured silicone comprises hollow glass spheres, the glass spheres should be sufficiently dispersed throughout the cured silicone such that if the cured silicone is shredded as part of a pretreatment process prior to combining with the liquid that an acceptable amount of the shredded pieces of cured silicone will stratify as desired in the liquid. However, applications are contemplated where an uneven or heterogeneous distribution of specific gravity reducing material, such as glass spheres, may be desirable. In the case of uneven distribution, care may need to be taken during the selection and/or execution of a pretreatment process so as not to render the stratification process of the invention ineffective due to variations in the specific gravity of different sections of the cured silicone caused by the uneven distribution of the glass spheres..

One skilled in the art would be able to select the appropriate organopolysiloxane to produce, or to incorporate materials to produce, a cured silicone composition suitable for the intended application and with the desired specific gravity to allow for. For examples of cured silicone compositions with reduced specific gravity and their method of making, see US 6,333,364, US 6,297,291, US 6,261,214, US 6,127, 457, and US 5,981,610.

The organopolysiloxane composition of the invention may comprise additional optional ingredients including, but not limited to, pigments, inhibitors, extending fillers, fumed silica, precipitated silica, brighteners, flavor enhancers, anti-bacterial agents, vitamins, and fragrance.

The hollow particles of the invention may include, but are not limited to, glass spheres. The glass spheres can vary in size and thickness, but the spheres generally are of sufficient strength to withstand the stress associated with the batching, curing and, if used, injection molding processes without excessive breakage. Spheres broken during injection molding can reduce and/or prevent the reduction of the specific gravity of the final cured silicone composition. The strength of the glass spheres in the injection molding process is proportional to their isostatic crush strength, which is measured by methods well-known in the art.

According to the invention, "isostatic crush pressure" is intended to mean the pressure under which the average survival of the glass spheres of the invention of a particular average density is between about eighty to ninety percent. In one embodiment, the crush strength of the glass spheres is greater than 55 MPa (8,000 pounds per square inch (psi)); in another embodiment, the crush strength is greater than 69 MPa (10,000 psi); in another embodiment, the crush strength is greater than 97 MPa (14,000 psi); in another embodiment, the crush strength is greater than 124 MPa (18,000 psi); in another embodiment, the crush strength is greater than 186 MPa (27,000 psi). In another embodiment, the glass spheres crush strength is from about 117 MPa (17,000) to about 200 MPa (29,000 psi). Furthermore, the isostatic crush strength required for the glass spheres of the invention is dependent on the injection pressure and the size of the gate of the mold in the injection molding process. By creating less shear, larger gates exert less force thereby allowing either the use of glass spheres with relatively lower crush strength or the use of relatively higher injection pressures. Conversely, smaller gates sizes create more shear thus exert larger force on the glass spheres thereby necessitating the use of glass spheres with relatively higher crush strengths or the use of relatively lower injection pressures.

The density of the glass spheres of the invention affects the final specific gravity of the cured silicone composition. If the dosage of the glass spheres remains constant, the specific gravity of the resulting cured silicone composition decreases as the density of the glass spheres used decreases. In one embodiment of the invention, the glass spheres have a density from about 0.4 to about 0.8 grams/cm³; in another embodiment, the glass spheres have a density from about 0.5 to about 0.8 grams/cm³; in another embodiment, the glass spheres have a density from about 0.5 to about 0.7 grams/cm³; in another embodiment, the glass spheres have a density from about 0.55 to about 0.65 grams/cm³. Although the shape of the glass sphere void-creating material is described as a sphere, other shapes are contemplated as long as they sufficiently reduce the specific gravity of the cured silicone composition. In addition, although the surface of the glass sphere void-creating material described here is not treated, surface treatment of the glass sphere is contemplated to, for example, enable the bonding, or better incorporation, of the glass spheres to or into the organopolysiloxanes. The glass spheres may be treated with, for example, organofunctional silane coupling agents such as those sold under the trade names Dow Coming Z-6300 and Z-6518.

The average diameter of the glass spheres of the invention may vary. In one embodiment, the mean diameter of the glass spheres is from about 10 to about 100 µm; in another embodiment, the average diameter of the glass spheres is from about 15 to about 75 µm; in another embodiment, the mean diameter of the glass spheres is from about 15 to about 50 µm; in another embodiment, from about 15 to about 35 µm; Examples of commercially available glass spheres useful in the present invention include Eccospheres from Trelleborg Emerson & Cuming, SPHERICEL^{®} 60P18 from Potters Industries, Inc., and 560, S60HS, and iM30K Glass Bubbles from 3M.

The only real limit on the dosage of the glass spheres in the organopolysiloxane composition is that at high dosages the glass spheres may reduce the performance of the resulting cured silicone composition in the end use application to an unacceptable level. One with skill in the art would know when the cure process or the performance of the cured silicone composition is unacceptably altered by the dosage of the glass spheres. The dosage of glass spheres in the organopolysiloxane composition can vary. In one embodiment, the cured silicone composition comprises from about 3 to about 50 weight percent glass spheres; in another embodiment, the cured silicone composition comprises from about 5 to about 30 weight percent glass spheres; in another embodiment, the cured silicone composition comprises from about 4 to about 15 weight percent glass spheres; in another embodiment, the cured silicone composition comprises from about 10 to about 14 weight percent by weight glass spheres.

The plastic of the invention is not limited in any way. Any organic plastic commonly used in commerce that can be recycled using the method of the present invention is contemplated. The plastics suitable in the instant invention can be classified as thermoplastic or thermosetting resins. Thermoplastic resins soften and flow when heated then harden when cooled and will repeat the phase transition with subsequent heating and cooling cycles. Conversely, thermosetting resins first liquefy then harden from the formation of stable polymer cross-linking and will not flow with additional heating and cooling cycles. Furthermore, the thermoplastic plastics of the invention can be further divided into the classes of amorphous and crystalline. Examples of plastics of the invention, include, but are not limited to, high density polyethylene (HDPE), low density polyethylene (LDPE), polypropylene, polyethylene terephthalate (PET), polyvinylidene chloride, poly(vinyl chloride), polyamideimide, polyethersulfone, polyarylsulfone, polyetherimide, polyarylate, polysulfone, polyamide (amorphous), polycarbonate, styrene-maleic anhydride, chlorinated poly(vinyl chloride), poly(methyl methacrylate), styrene-acrylonitrile, polystyrene, acrylonitrile-butadiene-styrene (ABS), polyetherketone, polyetheretherketone, polytetrafluoroethylene, poly(phenylene sulfide), liquid crystal polymer, nylon or polyamide, and acetal resin or polyoxymethylene.. In one embodiment of the invention, the plastic is PET; and in another embodiment, the plastic of the invention is ABS.

The plastics of the invention can be made and shaped into any variety of forms by any method known in the art including, but not limited to, pipe and tubing extrusion, profile extrusion, blown film extrusion, cast film extrusion, sheet extrusion, extrusion coating, foam extrusion, injection molding, structural foam molding, blow molding, rotational molding, expandable polystyrene molding, thermoforming, calendaring, casting, compression molding, transfer molding, open-mold processing, pultrusion, reaction injection molding, and resin transfer molding.

The liquid of the invention is not limited and can be any liquid that may be used in plastic recycling to aid in the separation of the plastic from the other components to be recycled. In one embodiment of the invention, the liquid comprises water and has a specific gravity of about 1. In another embodiment, the liquid is a mixture of a primary liquid and a secondary liquid miscible with the primary liquid. Examples of primary liquids include, but are not limited to water, low molecular weight organic alcohols, and glycols. Examples of secondary liquids include, but are not limited to, water, low molecular weight organic alcohols and glycols. When included as a part of the liquid to decrease the specific gravity, the amount of secondary liquid added will depend upon the specific gravity required to stratify the plastic and the cured silicone composition. In most cases a secondary liquid is only added when the specific gravity of both the plastic and cured silicone composition are below the specific gravity of the water. If the specific gravity of the plastic is above that of water, a lower specific gravity cured silicone composition may be used so that the silicone and plastic stratify in the water.

The specific gravity of the liquid at standard temperature and pressure can vary according to the invention. In one embodiment, the specific gravity of the liquid is from about 0.6 to about 1.5; in another embodiment, the specific gravity of the liquid is from about 0.6 to about 1.2; in another embodiment, the specific gravity of the liquid is from about 0.6 to about 1; in another embodiment, the specific gravity of the liquid is from about 0.70 to about 1; in another embodiment, the specific gravity of the liquid is from about 0.79 to about 1.10; in another embodiment, the specific gravity of the liquid is from about 0.79 to about 1; in another embodiment, the specific gravity of the liquid is from about 0.85 to about 1.10; in another embodiment, the specific gravity of the liquid is from about 0.8 to about 1. One skilled in the art would know how to blend liquids or add salts to achieve a desired specific gravity.

Additional materials may be added to the liquid of the invention as long as they do not prevent stratification of the cured silicone composition and plastic in the liquid. Examples of such materials include, but are not limited to, acids, bases, solvents, soaps, surfactants, detergents, inorganic salts, chelating agents, oxides, polyols, and other materials commonly added to aid in the recycling process. There are no real restrictions on what may be added to the separation liquid except that whatever ingredient that is added should not interfere with the stratification process or adversely affect the properties of the recycled. plastic. For example, it is foreseeable that certain materials may slow or prevent the separation of the cured silicone composition and the plastic and so their addition would be discouraged.

The second step of the present invention comprises allowing the cured silicone composition and the plastic to stratify in the liquid. Such stratification can occur in any equipment typically used for such separation processes including, but not limited to, a tank, reservoir, a pipe, and/or a centrifuge. Furthermore, means of allowing the cured silicone composition and plastic to stratify according to the invention include, but are not limited to, letting the cured silicone composition and plastic stand in a tank with no agitation or physical manipulation and/or encouraging or facilitating stratification by means known in the art such as, but not limited to, vibration, centrifugation, agitation, or aeration. An additional means of allowing the silicone and plastic to stratify according to the invention includes conveying the silicone and plastic in water that is moving or flowing as a current as part of a continuous separation process.

The third step of the invention comprises physically separating the cured silicone composition and the plastic by removing one of the stratum from the liquid. This physical separation can occur according to any method known in the art such as, but not limited to, the manual scooping, screening or straining one of the strata from the tank, the diversion of one stratum from the tank through, for example, a conduit, where the stratum can be further filtered, screened, washed and/or stratified. There is also no limit on the order in which the strata are removed. The strata can be removed one at a time with the plastic or the cured silicone composition strata removed first, or both strata may be removed simultaneously.

According to the method of the invention, the cured silicone composition and plastic may be subjected to a mechanical or physical process prior to combining with water to enable easier separation of materials in the liquid. Examples of such prior mechanical or physical processes include, but are not limited to, grinding, chopping, or shredding. These processes may be carried out using any known industrial equipment suitable for such processing. One skilled in the art would know how to select the appropriate equipment to process the silicone and plastic material prior to combining with the liquid.

According to the method of the invention, the cured silicone composition and/or the plastic may be subjected to further wash steps before and/or after being physically separated. Such wash step may be conducted according to any method known in the art and carried out with any suitable solvent such as water and in and by any equipment known in the art for such washing.

### EXAMPLES

The following examples are included to demonstrate preferred embodiments of the invention. It should be appreciated by those of skill in the art that the techniques disclosed in the examples which follow represent techniques discovered by the inventor to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result.
All percentages are in wt. % unless clearly indicated otherwise.

### Cured silicone composition Examples

Examples 1, 2 and 3 below are formulations for a cured silicone composition according to the invention. Examples 1, 2 and 3 are prepared by premixing the dimethylvinylsiloxy-terminated dimethylsiloxane (DVDMS) and amorphous silica to wet-out the amorphous silica with the DVDMS. Once the amorphous silica is wet-out, the other ingredients except the hollow glass (glass spheres) are added and mixed until homogeneous. When the mixture is homogeneous, the hollow glass spheres are added with mixing. The composition is injection molded forming the cured silicone composition of the invention.

The specific gravity of the cured silicone composition is determined in relation to water by dividing the weight of the cured silicone composition in grams by its volume in cubic centimeters at standard temperature and pressure.

**Table 1. Formulation Examples.**

| Ingredients (Trade name) | Example 1 Percent (wt.) | Example 2 Percent (wt.) | Example 3 Percent (wt.) |
|---|---|---|---|
| Dimethylvinylsiloxy-terminated dimethylsiloxane | 75.47 | 71.24 | 73.05 |
| Amorphous silica | 16.32 | 15.40 | 11.00 |
| Hydroxy-terminated dimethyl siloxane | 1.02 | 0.98 | 0.55 |
| Dimethylvinylsiloxy-terminated dimethyl siloxane/Tetramethyldivinyldisiloxane/1,3-diethenyl- 1,1,3,3-tetramethyldisiloxane platinum complex | 0.13 | 0.12 | 0.14 |
| Dimethylvinlysiloxy-terminated dimethyl, methylvinly siloxane | 1.05 | 1.07 | 0.97 |
| Ethynyl cyclohexanol | 0.03 | 0.03 | .03 |
| Trimethylsiloxy-terminated dimethyl, methylhydrogen siloxane | 1.32 | 1.38 | 0.81 |
| Hollow soda-lime-borosilicate glass with density 0.6 g/cm³ and an isostatic crush strength of 69 MPa (10,000 psi) | 4.66 | 9.78 | -- |
| Hollow soda-lime-borosilicate glass with density 0.6 g/cm3 and an isostatic crush strength of 124MPa (18,000 psi) | -- | -- | 13.00 |
| Hydrogen-terminated dimethyl siloxane | | | 0.45 |
| Total | 100.00 | 100.00 | 100.00 |
| Specific gravity of resulting cured silicone composition | 1.0027 | 0.9962 | 0.9800 |

### EXAMPLE 4

### Separation Process Example

A polyethylene terephthalate (PET) plastic bottle is equipped with a cured silicone composition valve formed by injection molding the composition of Example 2 at a pressure of approximately 69 MPa (10,000 psi) and temperature of 200 degrees Celsius. Some bead crushing was observed, but the resulting cure inhibition was not sufficient to make the resulting cured silicone composition unusable. The PET plastic bottle and cured silicone composition valve are then shredded together. The shredded PET and cured silicone composition are then manually shoveled into a tank of water. The water and shredded material in the tank are let stand for 24 hours. After standing for twenty-four hours, the cured silicone composition and PET have stratified in the water with the cured silicone composition stratum above the PET stratum. The cured silicone composition stratum and other materials in the cured silicone composition stratum are manually removed from the tank with a steel mesh strainer. The plastic remaining in the tank is removed, washed repeatedly, and shredded into flakes, which are then ready for melting into new PET products.

### EXAMPLE 5

### Separation Process Example

A high density polyethylene (HDPE) plastic bottle is equipped with a cured silicone composition valve formed by injection molding the composition of Example 1 at a pressure of 69 MPa (10,000 psi) and temperature of 200 degrees Celsius. Some bead crushing was observed, but the resulting cure inhibition was not sufficient to make the resulting cured silicone composition unusable. The HDPE plastic bottle and cured silicone composition valve are then shredded together. The shredded HDPE and cured silicone composition composition is then manually shoveled into a tank of water. The water and shredded material in the tank are let stand for 24 hours. After standing for twenty-four hours, the cured silicone composition and HDPE have stratified in the water with the cured silicone composition stratum below the HDPE stratum. The HDPE stratum is manually removed from the tank with a steel mesh strainer. The cured silicone composition remaining in the tank is removed. The HDPE is washed repeatedly, and shredded into flakes, which are then ready for melting into new HDPE products.

### EXAMPLE 6

### Separation Process Example

A polyethylene terephthalate (PET) plastic bottle is equipped with a cured silicone composition valve formed by injection molding the composition of Example 3 at a pressure of approximately 69 MPa (10,000 psi) and temperature of 200 degrees Celsius. Some bead crushing was observed, but the resulting cure inhibition was not sufficient to make the resulting cured silicone composition unusable. The PET plastic bottle and cured silicone composition valve are then shredded together. The shredded PET and cured silicone composition composition is then manually shoveled into a tank of water. The water and shredded material in the tank are let stand for 24 hours. After standing for twenty-four hours, the cured silicone composition and PET have stratified in the water with the cured silicone composition stratum above the PET stratum. The cured silicone composition stratum and other materials are manually removed from the tank with a steel mesh strainer. The plastic remaining in the tank is removed, washed repeatedly, and shredded into flakes, which are then ready for melting into new PET products.

## Claims

1. A method of separating a cured silicone composition and a plastic
wherein the cured silicone composition is formed by injection molding comprising;
I) combining a cured silicone composition and a plastic with a liquid, wherein the liquid has a specific gravity between that of the cured silicone composition and the plastic;
II) allowing the cured silicone composition and the plastic to stratify in the liquid to form a cured silicone composition strata and a plastic strata; and
III) physically separating the cured silicone composition and the plastic by removing either the cured silicone composition strata or the plastic strata from the liquid.

2. The method of claim 1 wherein the liquid has a specific gravity of about 1.

3. The method of claims 1 or 2 wherein the cured silicone composition is formed from an organopolysiloxane composition comprising void-creating materials or hollow particles, said void-creating materials or hollow particles being present in the cured silicone composition in a sufficient amount to reduce the specific gravity of the cured silicone composition below 1.

4. The method of claim 3 wherein the hollow particles comprise glass spheres.

5. The method of claim 4 wherein the glass spheres have an isostatic crush strength greater than 55 MPa (8,000 psi).

6. The method of claims 4 or 5. wherein the glass spheres have an average density of 0.5 to 0.8 grams per cubic centimeter.

7. The method of claims 4, 5 or 6 wherein the glass spheres are uniformly distributed throughout the cured silicone composition.

8. The method of any preceding claim wherein the plastic is selected from the group consisting of PET and ABS.

9. The method of claim 1 wherein the cured silicone composition is formed by injection molding wherein cured silicone composition is formed by injection

10. The method of any preceding claim wherein the cured silicone composition is formed from a thermosetting organopolysiloxane composition comprising (A) an alkenylpolysiloxane which contains at least two silicon-boned alkenyl groups in each molecule, (B) an organohydrogenpolysiloxane which has at least two silicon-bonded hydrogen atoms in each molecule, wherein the mole ratio of silicon-bonded hydrogen atoms contained in said component (B) to silicon-bonded alkenyl groups contained in said component (A) is within a range of 0.3:1 to 5:1, and (C) a platinum catalyst.

## Patentansprüche

1. Ein Verfahren zum Trennen einer gehärteten Silikonzusammensetzung und eines Ku nststoffs,
wobei die gehärtete Silikonzusammensetzung durch Spritzgießen gebildet wird, beinhaltend;
I) Kombinieren einer gehärteten Silikonzusammensetzung und eines Kunststoffs mit einer Flüssigkeit, wobei die Flüssigkeit eine relative Dichte zwischen derjenigen der gehärteten Silikonzusammensetzung und des Kunststoffs aufweist;
II) Ermöglichen, dass die gehärtete Silikonzusammensetzung und der Kunststoff in der Flüssigkeit Schichten bilden, um ein gehärtetes Silikonzusammensetzungsschichtpaket und ein Kunststoffschichtpaket zu bilden; und
III) physikalisches Trennen der gehärteten Silikonzusammensetzung und des Kunststoffs durch Entfernen entweder des gehärteten Silikonzusammensetzungsschichtpakets oder des Kunststoffschichtpakets aus der Flüssigkeit.

2. Verfahren gemäß Anspruch 1, wobei die Flüssigkeit eine relative Dichte von ungefähr 1 aufweist.

3. Verfahren gemäß Anspruch 1 oder 2, wobei die gehärtete Silikonzusammensetzung aus einer Organopolysiloxanzusammensetzung gebildet ist, beinhaltend leerraumschaffende Materialien oder hohle Partikel, wobei die leerraumschaffenden Materialien oder hohlen Partikel in ausreichender Menge in der gehärteten Silikonzusammensetzung vorhanden sind, dass sie die relative Dichte der gehärteten Silikonzusammensetzung unter 1 reduzieren können.

4. Verfahren gemäß Anspruch 3, wobei die hohlen Partikel Glaskugeln beinhalten.

5. Verfahren gemäß Anspruch 4, wobei die Glaskugeln eine isostatische Druckfestigkeit von mehr als 55 MPa (8000 psi) aufweisen.

6. Verfahren gemäß Anspruch 4 oder 5, wobei die Glaskugeln eine Durchschnittsdichte von 0,5 bis 0,8 Gramm pro Kubikzentimeter aufweisen.

7. Verfahren gemäß Anspruch 4, 5 oder 6, wobei die Glaskugeln durch die gehärtete Silikonzusammensetzung hindurch gleichmäßig verteilt sind.

8. Verfahren gemäß einem der vorhergehenden Ansprüche, wobei der Kunststoff ausgewählt ist aus der Gruppe, bestehend aus PET und ABS.

9. Verfahren gemäß Anspruch 1, wobei die gehärtete Silikonzusammensetzung durch Spritzgießen gebildet wird.

10. Verfahren gemäß einem der vorhergehenden Ansprüche, wobei die gehärtete Silikonzusammensetzung aus einer thermohärtenden Organosiloxanzusammensetzung gebildet ist, beinhaltend (A) ein Alkenylpolysiloxan, das mindestens zwei siliziumgebundene Alkenylgruppen in jedem Molekül enthält, (B) ein Organowasserstoffpolysiloxan, das mindestens zwei siliziumgebundene Wasserstoffatome in jedem Molekül aufweist, wobei das Molverhältnis von in der Komponente (B) enthaltenen siliziumgebundenen Wasserstoffatomen zu in der Komponente (A) enthaltenen siliziumgebundenen Alkenylgruppen in einem Bereich von 0,3:1 bis 5:1 liegt, und (C) einen Platinkatalysator.

## Revendications

1. Une méthode de séparation d'une composition de silicone durcie et d'un plastique dans laquelle la composition de silicone durcie est formée par moulage par injection comprenant :
I) combiner une composition de silicone durcie et un plastique avec un liquide, le liquide ayant une gravité spécifique entre celle de la composition de silicone durcie et du plastique ;
II) permettre à la composition de silicone durcie et au plastique de se stratifier dans le liquide pour former une strate de composition de silicone durcie et une strate de plastique ; et
III) séparer physiquement la composition de silicone durcie et le plastique en retirant soit la strate de composition de silicone durcie, soit la strate de plastique du liquide.

2. La méthode de la revendication 1 dans laquelle le liquide a une gravité spécifique d'environ 1.

3. La méthode des revendications 1 ou 2 dans laquelle la composition de silicone durcie est formée à partir d'une composition d'organopolysiloxane comprenant des matières créant du vide ou des particules creuses, lesdites matières créant du vide ou particules creuses étant présentes dans la composition de silicone durcie dans une quantité suffisante pour réduire la gravité spécifique de la composition de silicone durcie en dessous de 1.

4. La méthode de la revendication 3 dans laquelle les particules creuses comprennent des grains de verre.

5. La méthode de la revendication 4 dans laquelle les grains de verre ont une résistance à l'écrasement isostatique supérieure à 55 MPa (8 000 psi).

6. La méthode des revendications 4 ou 5 dans laquelle les grains de verre ont une densité moyenne allant de 0,5 à 0,8 grammes par centimètre cube.

7. La méthode des revendications 4, 5 ou 6 dans laquelle les grains de verre sont uniformément répartis dans toute la composition de silicone durcie.

8. La méthode de n'importe quelle revendication précédente dans laquelle le plastique est sélectionné dans le groupe consistant en PET et ABS.

9. La méthode de la revendication 1 dans laquelle la composition de silicone durcie est formée par moulage par injection.

10. La méthode de n'importe quelle revendication précédente dans laquelle la composition de silicone durcie est formée à partir d'une composition d'organopolysiloxane thermodurcissable comprenant (A) un alcénylpolysiloxane qui contient au moins deux groupes alcényle liés au silicone dans chaque molécule, (B) un organohydrogénopolysiloxane qui a au moins deux atomes d'hydrogène liés au silicone dans chaque molécule, dans laquelle le rapport molaire atomes d'hydrogène liés au silicone contenus dans ledit composant (B) / groupes alcényle liés au silicone contenus dans ledit composant (A) est dans une gamme allant de 0,3/1 à 5/1, et (C) un catalyseur au platine.
